(19) Europäisches Patentamt
European Patent Office
Office européen des brevets

(11) Veröffentlichungsnummer: **0 370 445 A2**

(12) **EUROPÄISCHE PATENTANMELDUNG**

(21) Anmeldenummer: 89121471.0

(51) Int. Cl.5: **C08G 65/32, C08G 59/50**

(22) Anmeldetag: 20.11.89

Patentansprüche für folgenden Vertragsstaat: ES.

(30) Priorität: 23.11.88 CH 4350/88
07.09.89 CH 3247/89

(43) Veröffentlichungstag der Anmeldung:
30.05.90 Patentblatt 90/22

(84) Benannte Vertragsstaaten:
AT CH DE ES FR GB IT LI

(71) Anmelder: CIBA-GEIGY AG
Klybeckstrasse 141
CH-4002 Basel(CH)

(72) Erfinder: Wolf, Jean-Pierre, Dr.
Route du Couchant 1
CH-1723 Marly(CH)
Erfinder: Setiabudi, Frans, Dr.
Kapellenstrasse 7
D-7812 Bad Krozingen(DE)

(74) Vertreter: Zumstein, Fritz, Dr. et al
Zumstein & Klingseisen Patentanwälte
Bräuhausstrasse 4
D-8000 München 2(DE)

(54) **Polytetrahydrofurandithiole und deren Verwendung.**

(57) Polytetrahydrofurandithiole der Formel I

$$HS{+}CH_2CH_2CH_2CH_2O{+}_y CH_2CH_2CH_2CH_2\text{-}SH \quad (I),$$

worin y eine ganze Zahl von 2 bis 30 bedeutet, eignen sich, insbesondere in Kombination mit Aminen, als Härter für Epoxidharze. Die gehärteten Systeme weisen gute mechanische Eigenschaften und eine erhöhte Flexibilität auf.

EP 0 370 445 A2

# Polytetrahydrofurandithiole und deren Verwendung

Die Erfindung betrifft neue Polytetrahydrofurandithiole, ein Verfahren zu deren Herstellung, deren Verwendung als Härtungsmittel für Epoxidharze und die daraus erhältlichen vernetzten Produkte.

Die US 3,728,400 beschreibt ein Verfahren zur Herstellung von Polymercaptanen. Dabei werden organische polyhalogenverbindungen unter bestimmten Reaktionsbedingungen mit Natriumhydrosulfid umgesetzt. So wird auf diese Art z.B. Bis(4-chlorbutyl)ether zum entsprechenden Dithiol umgesetzt. Die so hergestellten Verbindungen eignen sich als Härter für Epoxidharze, wobei ausgehärtete Harze mit guter Zugscherfestigkeit erhalten werden.

Die US 4,259,474 beschreibt schwefelhaltige Polyoxyalkylene, darunter auch Polymere, welche neben anderen sich wiederholenden Oxyalkyleneinheiten einen Oxybutylenrest aufweisen. Die Polymere können u.a. auch Thiolendgruppen enthalten und werden vor allem als Schmiermittel für Metalle eingesetzt.

Die DD 256 715 beschreibt ein Verfahren zur Herstellung von hochmolekularen thermoplastischen Epoxid-Amin-Dithiol-Polyaddukten, die in verschiedenen Lösungsmitteln löslich sind und mittlere Molekülmassen $\overline{M}_n$ > 5000 aufweisen. Als Dithiol werden auch Oxyalkylendithiole, wie z.B. Triglykoldithiol, eingesetzt.

Die DE-OS 2 934 948 beschreibt ein Verfahren zur Herstellung von Mercaptoalkylsulfiden und Mercaptoalkylethern, darunter auch SH-terminierte Polyethylenglykole, durch Hydrazinolyse der entsprechenden Isothiuroniumsalze. Die Verbindungen eignen sich als Zwischenprodukte für schwefelhaltige Stoffe, welche in der Photographie Verwendung finden.

Gegenstand vorliegender Erfindung sind Polytetrahydrofurandithiole der Formel I

$$HS{+}CH_2CH_2CH_2CH_2O{+}_y\, CH_2CH_2CH_2CH_2\text{-}SH \quad (I),$$

worin y eine ganze Zahl von 2 bis 30 bedeutet.

Ein weiterer Gegenstand der Erfindung ist ein Verfahren zur Herstellung der Dithiole der Formel I durch Umsetzung eines Polytetrahydrofurandiols der Formel II

$$HO{+}CH_2CH_2CH_2CH_2O{+}_y\, CH_2CH_2CH_2CH_2\text{-}OH \quad (II)$$

zum entsprechenden Dihalogenderivat der Formel III

$$X{+}CH_2CH_2CH_2CH_2O{+}_y\, CH_2CH_2CH_2CH_2\text{-}X \quad (III),$$

worin X Cl, Br oder I bedeutet und y die oben angegebene Bedeutung hat, und anschliessende Ueberführung des Dihalogenderivats in das Dithiol der Formel I.

Polytetrahydrofurandiole der Formel II sind bekannt und auch im Handel erhältlich. Beispiele solcher Produkte sind Poly-THF 650®, Poly-THF 1000® oder Poly-THF 2000® der BASF, welche Verbindungen der Formel II mit y gleich 7-8, 12-13 bzw. 26-27 entsprechen. Die Herstellung von Dithiolen ausgehend von Diolen ist an sich bekannt. In einem bevorzugten Verfahren wird das Diol der Formel II durch Umsetzung mit Thionylchlorid in Gegenwart einer Base in ein Dichlorderivat der Formel III mit X = Cl übergeführt, die Verbindung der Formel III wird mit Thioharnstoff zum Isothiuroniumchlorid der Formel IV umgesetzt

$$(H_2N)_2C=\overset{\oplus}{S}{+}CH_2CH_2CH_2CH_2O{+}_y\, CH_2CH_2CH_2CH_2-\overset{\oplus}{S}=C(NH_2)_2 \cdot 2\, Cl^{\ominus} \quad (IV),$$

und dieses wird anschliessend zum Dithiol der Formel I hydrolisiert.

Die geschilderte Umsetzung von Alkoholen zu Thiolen wird beispielsweise in Organic Synthesis, Collective Volume 3, Seiten 698-700 und Collective Volume 4, Seiten 401-403, Wiley, New York 1955 bzw. 1963 beschrieben.

Bevorzugt werden erfindungsgemässe Dithiole, worin y eine ganze Zahl von 5 bis 30, insbesondere von 7 bis 27, bedeutet. Am meisten bevorzugt werden Dithiole, worin y 7 bis 8, 12 bis 13 oder 26 bis 27 bedeutet.

Die erfindungsgemässen Verbindungen weisen vorzugsweise ein mittleres Molekulargewicht $\overline{M}_n$ kleiner als 2000 und insbesondere kleiner als 1000 auf.

Die erfindungsgemässen Dithiole eignen sich insbesondere als Härtungsmittel für Epoxidharze. Gegenstand der Erfindung sind somit auch die Verwendung der Dithiole der Formel I als Härtungsmittel für Epoxidharze sowie die dadurch erhältlichen vernetzten Produkte.

Besonders gute Resultate werden erzielt, wenn die erfindungsgemässen Dithiole zusammen mit Aminen, insbesondere mit Aminen mit mindestens zwei primären Aminogruppen, als Härtungsmittel verwendet werden.

Mit solchen Gemischen gehärtete Epoxidharze zeichnen sich durch erhöhte Flexibilität und zähelastische Eigenschaften kombiniert mit noch immer guten Festigkeits- und Härte-Werten aus.

Als Epoxidharz kann im Prinzip jede in der Technik der Epoxidharze übliche Verbindung eingesetzt werden.

Beispiele für Epoxidharze sind:

I) Polyglycidyl- und Poly(β-methylglycidyl)ester erhältlich durch Umsetzung einer Verbindung mit mindestens zwei Carboxylgruppen im Molekül und Epichlorhydrin bzw. β-Methyl-epichlorhydrin. Die Umsetzung erfolgt zweckmässig in der Gegenwart von Basen.

Als Verbindung mit mindestens zwei Carboxylgruppen im Molekül können aliphatische Polycarbonsäuren verwendet werden. Beispiele für diese Polycarbonsäuren sind Oxalsäure, Bernsteinsäure, Glutarsäure, Adipinsäure, Pimelinsäure, Korksäure, Azelainsäure oder dimerisiertes bzw. trimerisierte Linolsäure.

Es können aber auch cycloaliphatische Polycarbonsäuren eingesetzt werden, wie beispielsweise Tetrahydrophthalsäure, 4-Methyltetrahydrophthalsäure, Hexahydrophthalsäure oder 4-Methylhexahydrophthalsäure.

Weiterhin können aromatische Polycarbonsäuren Verwendung finden, wie beispielsweise Phthalsäure, Isophthalsäure oder Terephthalsäure.

II) Polyglycidyl- oder Poly(β-methylglycidyl)ether erhältlich durch Umsetzung einer Verbindung mit mindestens zwei freien alkoholischen Hydroxygruppen und/oder phenolischen Hydroxylgruppen und Epichlorhydrin oder β-Methylepichlorhydrin unter alkalischen Bedingungen, oder in Anwesenheit eines sauren Katalysators und anschliessende Alkalibehandlung.

Ether dieses Typs leiten sich beispielsweise ab von acyclischen Alkoholen, wie Ethylenglykol, Diethylenglykol und höheren Poly(oxyethylen)glykolen, Propan-1,2-diol oder Poly(oxypropylen)glykolen, Propan-1,3-diol, Butan-1,4-diol, Poly(oxytetramethylen)glykolen, Pentan-1,5-diol, Hexan-1,6-diol, Hexan-2,4,6-triol, Glycerin, 1,1,1-Trimethylolpropan, Pentaerythrit, Sorbit, sowie von Polyepichlorhydrinen.

Sie leiten sich aber auch beispielsweise ab von cycloaliphatischen Alkoholen, wie 1,4-Cyclohexandimethanol, Bis(4-hydroxycyclohexyl)methan oder 2,2-Bis(4-hydroxycyclohexyl)propan, oder sie besitzen aromatische Kerne, wie N,N-Bis(2-hydroxyethyl)anilin oder p,p′-Bis(2-hydroxyethylamino)diphenylmethan.

Die Epoxidverbindungen können sich auch von einkernigen Phenolen ableiten, wie beispielsweise von Resorcin oder Hydrochinon; oder sie basieren auf mehrkernigen Phenolen, wie beispielsweise Bis(4-hydroxyphenyl)methan, 4,4′-Dihydroxybiphenyl, Bis(4-hydroxyphenyl)sulfon, 1,1,2,2-Tetrakis-(4-hydroxyphenyl)ethan, 2,2-Bis(4-hydroxyphenyl)propan, 2,2-Bis(3,5-dibrom-4-hydroxyphenyl)propan sowie von Novolaken erhältlich durch Kondensation von Aldehyden, wie Formaldehyd, Acetaldehyd, Chloral oder Furfuraldehyd, mit Phenolen, wie Phenol, oder mit Phenolen, die im Kern mit Chloratomen oder $C_1$-$C_9$-Alkylgruppen substituiert sind, wie beispielsweise 4-Chlorphenol, 2-Methylphenol oder 4-tert-Butylphenol oder durch Kondensation mit Bisphenolen, so wie oben beschrieben.

III) Poly(N-glycidyl)verbindungen erhältlich durch Dehydrochlorierung der Reaktionsprodukte von Epichlorhydrin mit Aminen, die mindestens zwei Aminwasserstoffatome enthalten. Bei diesen Aminen handelt es sich zum Beispiel um Anilin, n-Butylamin, Bis(4-aminophenyl)methan, m-Xylylendiamin oder Bis-(4-methylaminophenyl)methan.

Zu den Poly(N-glycidyl)verbindungen zählen aber auch Triglycidylisocyanurat, N,N′-Diglycidylderivate von Cycloalkylenharnstoffen, wie Ethylenharnstoff oder 1,3-Propylenharnstoff, und Diglycidylderivate von Hydantoinen, wie von 5,5-Dimethylhydantoin.

IV) Poly(S-glycidyl)verbindungen, beispielsweise Di-S-glycidylderivate, die sich von Dithiolen, wie beispielsweise Ethan-1,2-dithiol oder Bis(4-mercaptomethylphenyl)ether ableiten.

V) Cycloaliphatische Epoxidharze, beispielsweise Bis(2,3-epoxycyclopentyl)ether, 2,3-Epoxycyclopentylglycidylether, 1,2-Bis(2,3-epoxycyclopentyloxy)ethan oder 3,4-Epoxycylohexylmethyl-3′4′-epoxycyclohexancarboxylat.

Es lassen sich aber auch Epoxidharze verwenden, bei denen die 1,2-Epoxidgruppen an unterschiedliche Heteroatome bzw. funktionelle Gruppen gebunden sind; zu diesen Verbindungen zählen beispielsweise das N,N,O-Triglycidylderivat des 4-Aminophenols, der Glycidylether-Glycidylester der Salicylsäure, N-Glycidyl-N′-(2-glycidyloxypropyl)-5,5-dimethylhydantoin oder 2-Glycidyloxy-1,3-bis(5,5-dimethyl-1-glycidylhydantoin-3-yl)propan.

Bevorzugt verwendet werden Epoxidharze mit einem Epoxidgehalt von 2 bis 10 Aequivalenten/kg, welche Glycidylether, Glycidylester oder N-Glycidylderivate von aromatischen, heterocyclischen, cycloaliphatischen oder aliphatischen Verbindungen sind.

Besonders bevorzugt als Epoxidharz werden Polyglycidylether von mehrwertigen Phenolen, wie beispielsweise von 2,2-Bis(4-hydroxyphenyl)propan (Bisphenol A) oder Bis(4-hydroxyphenyl)methan (Bisphenol F).

Am meisten bevorzugt als Epoxidharz werden Diglycidylether von Bisphenol A.

Als Amin-Komponente kann jedes beliebige Amin mit mehr als zwei N-H-Bindungen verwendet werden. Bevorzugt werden Amine mit mindestens zwei primären Aminogruppen, d.h. mindestens 2 $NH_2$-Gruppen, verwendet. Solche Amine können zwei oder auch mehrere $NH_2$-Gruppen aufweisen und können auch noch

sekundäre und/oder tertiäre Amin-Stickstoffatome enthalten.

Beispiele für geeignete Polyamine sind aliphatische, cycloaliphatische, aromatische oder heterocyclische Amine, wie Bis(4-aminophenyl)methan, Anilin-Formaldehyd-Harze, Bis(4-aminophenyl)sulfon, Propan-1,3-diamin, 2,2-Dimethyl-1,3-propandiamin (Neopentandiamin), Hexamethylendiamin, Diethylentriamin, Bis-(3-aminopropyl)amin, N,N-Bis(3-aminopropyl)methylamin, Triethylentetramin, Pentaethylenhexamin, 2,2,4-Trimethylhexan-1,6-diamin, m-Xylylendiamin, 1,2- und 1,4-Diaminocyclohexan, Bis(4-aminocyclohexyl)-methan, 2,2-Bis(4-aminocyclohexyl)propan und 3-Aminomethyl-3,5,5-trimethylcyclohexylamin (Isophorondiamin), Polyaminoimidazoline sowie Polyaminoamide, wie beispielsweise solche aus aliphatischen Polyaminen und dimerisierten oder trimerisierten Fettsäuren. Geeignete Polyamine sind auch die als Jeffamine® bekannten Polyoxyalkylenamine der Firma Texaco, wie z.B. Jeffamine® EDR 148, D 230, D 400 oder T 403. Bei der Verwendung von aliphatischen und cycloaliphatischen Aminen werden vorzugsweise keine Glycidylester als Harze eingesetzt.

Bevorzugt werden aliphatische oder cycloaliphatische Polyamine. Unter den cycloaliphatischen Polyaminen besonders bevorzugt sind 3-Aminomethyl-3,5,5-trimethylcyclohexylamin (Isophorondiamin), Bis(4-aminocyclohexyl)methan, Bis(3-methyl-4-aminocyclohexyl)methan und Polyaminoimidazoline, wie beispielsweise das als Eurodur® 370 vertriebene Polyaminoimidazolin der Firma Schering AG. Unter den aliphatischen Polyaminen werden Verbindungen der Formeln V bis X bevorzugt

$H_2N-R_2-NH_2$, (V)

$H_2N-(CH_2CH_2O)_aCH_2CH_2-NH_2$ (VI)

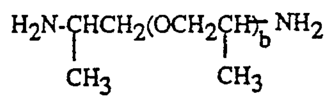

(VII)

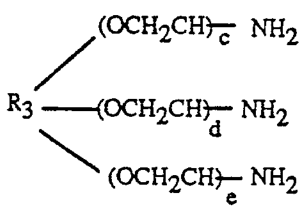

(VIII)

$H_2N-(CH_2CH_2CH_2NH)_fCH_2CH_2CH_2-NH_2$ (IX)

$H_2N-(CH_2CH_2NH)_gCH_2CH_2-NH$ (X),

worin $R_2$ ein geradkettiger oder verzweigter $C_2$-$C_{10}$-Alkylenrest ist, a eine ganze Zahl von 1-10, vorzugsweise 2, b eine ganze Zahl von 1-10, vorzugsweise 2-6, c, d und e unabhängig voneinander eine ganze Zahl von 1-20, vorzugsweise 2-5, f eine ganze Zahl von 1-5, vorzugsweise 1 und g eine ganze Zahl von 1-10, vorzugsweise 1-5, sind und $R_3$ für einen dreiwertigen Rest der Formeln

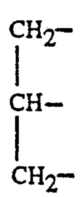

oder insbesondere

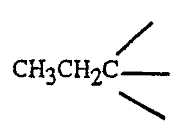

steht.

Ganz besonders bevorzugt werden 2,2,4-Trimethylhexan-1,6-diamin, Jeffamine® EDR 148 der Formel VI mit a = 2, Jeffamine® D 230 bzw. D 400 der Formel VII mit b = 2-3 bzw. b = 5-6, Jeffamine® T 403 der Formel VIII, Bis(3-aminopropyl)amin, Diethylentriamin, Triethylentetramin und pentaethylenhexamin.

Neben den bevorzugten Polyaminen mit mindestens 2 $NH_2$-Gruppen können im Härtergemisch auch

kleinere Mengen anderer Amine enthalten sein, beispielsweise in Mengen von weniger als 50 Gew.% des Amins, bezogen auf den totalen Amingehalt. Ein Beispiel eines solchen Amins ist 3-(N,N-Dimethylaminopropyl)-3,-aminopropylamin.

Die härtbaren Epoxidharz-Stoffgemische können, falls erwünscht, auch Härtungsbeschleuniger enthalten, obwohl Gemische ohne Härtungsbeschleuniger bevorzugt werden. Beispiele für Härtungsbeschleuniger sind tertiäre Amine, deren Salze oder quaternäre Ammoniumverbindungen, wie Benzyldimethylamin, 2,4,6-Tris(dimethylaminomethyl)phenol, 1-Methylimidazol, 2-Ethyl-4-methylimidazol, 4-Aminopyridin, Tripentylammoniumphenolat oder Tetramethylammoniumchlorid; oder Alkalimetallalkoholate, wie Na-Alkoholate von 2,4-Dihydroxy-3-hydroxymethylpentan; oder substituierte Harnstoffe, wie N-(4-Chlorphenyl)-N′,N′-dimethylharnstoff oder N-(3-Chlor-4-methylphenyl)-N′,N′-dimethylharnstoff (Chlortoluron).

Zusätzlich zu den Dithiolen der Formel I können die Stoffgemische noch kleinere Mengen anderer Di- oder polythiole enthalten, beispielsweise in Mengen von weniger als 50 Gew.%, bezogen auf das Dithiol der Formel I. Geeignete solche Dithiole sind Verbindungen der Formel XI

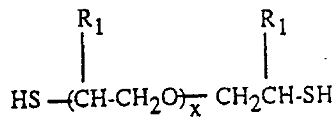 (XI),

worin $R_1$ unabhängig voneinander Wasserstoff oder Methyl und x eine Zahl von 2 bis 50 bedeuten.

Bei den Dithiolen der Formel XI kann es sich um Polyethylenglykol-Derivate, um Polypropylenglykol-Derivate oder auch um Copolymere mit Oxyethylen- und Oxypropyleneinheiten handeln. Die Copolymere können Blockpolymere oder statistische Polymere sein. Die entsprechenden Blockpolymere werden manchmal auch Polypropylenglykolethoxylat bzw. Polyethylenglykolpropoxylat genannt, je nachdem, ob sie endständige polyethylenglykol- oder Polypropylenglykolblöcke aufweisen. Die im Handel erhältlichen Polypropylenglykole weisen vorwiegend sekundäre enständige Hydroxylgruppen auf, wie dies für die entsprechenden Dithiole der Formel XI dargestellt ist. Es versteht sich von selber, dass auch Polypropylen-Dithiole mit primären Thiolgruppen als Komponente der härtbaren Stoffegemische verwendet werden können.

Dithiole der Formel XI mit einem Molekulargewicht $\overline{M}_n$ kleiner als 2000, insbesondere kleiner als 1000 werden bevorzugt.

Besonders bevorzugt werden Dithiole der Formel XI, worin x eine ganze Zahl von 2 bis 20, insbesondere von 2 bis 12 ist.

Am meisten bevorzugt wird das Dithiol der Formel XI, worin $R_1$ Wasserstoff und x = 2 bedeuten. Dieses Dithiol ist auch als Triglykoldimercaptan oder 1,2-Bis(2′-mercaptoethoxy)ethan bekannt.

Die Härtung der Stoffgemische erfolgt, im allgemeinen bereits bei tiefen Temperaturen von etwa 0 °C bis Raumtemperatur. Falls erwünscht, kann auch bei höherer Temperatur, beispielsweise bei 40 bis 100 °C gehärtet oder gegebenenfalls nachgehärtet werden. Einer der Vorzüge der vorliegenden Stoffgemische ist, dass man je nach Wahl der Dithiole und der Amine und gegebenenfalls eines Härtungsbeschleunigers sowie je nach der relativen Menge der Dithiole und der Amine praktisch nach Belieben die Gebrauchsdauer der härtbaren Gemische einstellen kann. Dasselbe trifft auch für die Eigenschaften der gehärteten Produkte zu. Je nach Art und der relativen Menge des Dithiols und des Amins können Epoxidharzsysteme mit einer sehr breiten Spanne an Flexibilität und Zähigkeit hergestellt werden. Die Gesamtmenge des Härters wird vorzugsweise so berechnet, dass sie der stöchiometrisch benötigten Mengen entspricht.

Je nach Art des eingesetzten Epoxidharzes bzw. dessen Epoxidäquivalents, sowie des verwendeten Dithiols und Amins können die relativen Mengen der Komponenten sehr stark variieren. Die eingesetzten Mengen des Dithiols und des Amins werden auch vom Anwendungszweck, d.h. von der erwünschten Flexibilität des gehärteten Produktes sowie von der gewünschten Gebrauchsdauer des Stoffgemisches abhängen. Im allgemeinen steigt sowohl die Flexibilität als auch die Gebrauchsdauer mit der Erhöhung der relativen Menge des Dithiols im Dithiol/Amin-Gemisch.

Als besonders geeignet haben sich 5-30, vorzugsweise 10-25 Gew.% des Dithiols und 3-35, vorzugsweise 5-20 Gew.% des Amins bezogen auf die Gesamtmenge des Dreiergemisches Dithiol/Amin/Epoxidharz erwiesen.

Besonders gute Eigenschaften der gehärteten Produkte werden auch erzielt, wenn der Anteil der an die Thiolgruppen des Dithiols gebundenen Wasserstoffatome 15-85, vorzugsweise 20-80, besonders bevorzugt 25-75 %, bezogen auf die Gesamtzahl der an die Thiolgruppen des Dithiols und der an die Aminogruppe des Amins gebundenen aktiven Wasserstoffatome beträgt.

Falls gewünscht, kann man den erfindungsgemässen Gemischen zur weiteren Erhöhung der Flexibilität

noch Weichmacher zugeben. Dabei können alle in der Technik als Weichmacher bekannte Verbindungen eingesetzt werden. Beispiele geeigneter Weichmacher sind Dibutylphthalat, Phthalsäureester, Phosphorsäureester, Adipin- und Sebacinsäureester, Glykole, Glykolsäureester oder Polyole.

Besonders geeignet als Weichmacher haben sich Benzylalkohol und insbesondere 3-Phenylpropanol erwiesen.

Die Menge des Weichmachers beträgt vorzugsweise 4-25, insbesondere 6-20 Gewichtsteile, bezogen auf 100 Gewichtsteile des Epoxidharzes.

Gewünschtenfalls kann man den härtbaren Gemischen zur Herabsetzung der Viskosität reaktive Verdünner, wie z.B. Butandioldiglycidylether, Butylglycidylether, 2,2,4-Trimethylpentylglycidylether, Phenylglycidylether, Kresylglycidylether oder Glycidylester zusetzen.

Die härtbaren Stoffgemische können auch Haftvermittler enthalten. Im Prinzip kann jeder bekannte Haftvermitteler verwendet werden. Als besonders geeignete Haftvermittler haben sich Silane, wie z.B. γ-Glycidyloxypropyltrimethoxysilan (Silan A-187 der Fa. Union Carbide) oder γ-Mercaptopropyltrimethoxysilan (Silan A-189 der Fa. Union Carbide) oder Titanverbindungen, wie Tetraisopropyl-bis(dioctylphosphonato)-titanat (KR 41B der Fa. Kenrich Petrochemicals, Inc. USA), erwiesen.

Als weiter übliche Zusätze können die erfindungsgemässen Gemische ferner Streck-, Füll- und Verstärkungsmittel, wie beispielsweise Steinkohleteer, Bitumen, Textilfasern, Glasfasern, Asbestfasern, Borfasern, Kohlenstoff-Fasern, mineralische Silikate, Glimmer, Quarzmehl, Aluminiumoxidhydrat, Bentonite, Wollastonit, Kaolin, Kieselsäureaerogel oder Metallpulver, z.B. Aluminiumpulver oder Eisenpulver, ferner Pigmente und Farbstoffe, wie Russ, Oxidfarben und Titandioxid, Flammschutzmittel, Thixotropiemittel, Verlaufmittel ("flow control agents"), wie Silicone, Wachse und Stearate, die zum Teil als Formtrennmittel Anwendung finden, Antioxidantien und Lichtschutzmittel enthalten.

Die Herstellung der härtbaren Stoffgemische kann in üblicher Weise durch Vermischen der Komponenten mit Hilfe bekannter Mischaggregate (Rührer, Walzen) erfolgen.

Die gehärteten Produkte zeichnen sich durch die eingangs geschilderten vorteilhaften Eigenschaften aus. Ausgehärtete Epoxidharze mit der Flexibilität und den zähelastischen Eigenschaften der erfindungsgemässen Produkte waren bisher nicht bekannt. Zudem weisen die erfindungsgemässen vernetzten Produkte trotz ihrer hohen Flexibilität und Zähelastizität auch hervorragende mechanische und thermische Eigenschaften auf.

Die härtbaren Gemische lassen sich beispielsweise als Klebstoffe, Matrixharze, Lacke, Dichtungsmassen oder Injektionsmassen oder ganz allgemein zur Herstellung von gehärteten Produkten verwenden. Sie können in jeweils dem speziellen Anwendungsgebiet angepasster Formulierung, in ungefülltem oder gefülltem Zustand, z.B. als Dichtungsmassen, Anstrichmittel, Beschichtungsmassen, Lacke, Tauchharze, Giessharze, Imprägnierharze, Laminierharze, Matrixharze und Klebemittel verwendet werden.

Die folgenden Beispiele erläutern die Erfindung.

Beispiel 1: Herstellung der Polytetrahydrofurandithiole A-C

$HS{+}CH_2CH_2CH_2CH_2O{+}_y\,CH_2CH_2CH_2CH_2\text{-}SH$

A: y = 7-8; B: y = 12-13; C: y = 26-27

Zu 1 mol des entsprechenden Poly-THF (Handelsprodukt der BASF AG) und 1 ml Pyridin werden bei 40-50 °C unter $N_2$ 500 ml Thionylchlorid zugetropft. Die klare, gelbliche Lösung wird 6 Stunden bei 80 °C am Rückfluss gekocht. Ueberschüssiges Thionylchlorid wird im Vakuum abdestilliert und das gelbe viskose Poly-THF-Dichlorid am Hochvakuum bei 80 °C getrocknet. Das auf diese Weise erhaltene Poly-THF-Dichlorid wird zu einer siedenden Lösung von 2,2 mol Thioharnstoff in 650 ml 95 % Ethylalkohol getropft und über Nacht bei 76 °C am Rückfluss gekocht. Anschliessend wird der Ethylalkohol abdestilliert und der viskose Rückstand mit 0,5 g Benzyltrimethylammoniumchlorid und 600 ml 6N NaOH-Lösung versetzt. Es wird 2 Stunden bei 95 °C gekocht, dann auf 60 ° abgekühlt und portionenweise mit 32 % HCl auf pH = 2 angesäuert. Nach Abkühlen auf Raumtemperatur wird mit 750 ml Ethylacetat versetzt, die Phasen werden getrennt, die organische Phase wird mit $H_2O$ gewaschen, über $Na_2SO_4$ getrocknet und im Vakuum eingeengt.

| Physikalische Daten | | | |
|---|---|---|---|
| Dithiol | A | B | C |
| Ausbeute | 91 % | 90 % | 90 % |
| $\overline{M}_n$ (GPC in THF) | 1137 | 1719 | 3090 |
| $\overline{M}_w/\overline{M}_n$ | 1,68 | 1,87 | 2,78 |
| Gehalt S[1)] (Gew.%) | 7,7 | 5,7 | 2,68 |
| Gehalt SH[2)] (mAeq./g) | 2,07 | 1,56 | 0,68 |
| Viskosität[3)] bei 40 °C (mPa·s) | 175 | 366 | 2420 |
| Schmelzbereich | bei Raumtemperatur flüssig | 23-27 °C | 30-35 °C |

1) Elementaranalyse
2) Titration mit 0,1 N $AgNO_3$
3) I.C.I. Cone and Plate Viscometer

Beispiele 2-3: Epoxidharz-Stoffgemische enthaltend Polytetrahydrofurandithiole A oder B

Die Zusammensetzung der in den Beispielen verwendeten Stoffgemische sowie die Eigenschaften der gehärteten Produkte sind aus der Tabelle ersichtlich. Die Härtung erfolgt jeweils während einer Woche bei 80 °C.

| Beispiel | 2 | 3 |
|---|---|---|
| Epoxidharz[1)] (g) | 100 | 100 |
| Dithiol A (g) | 25,1 | - |
| Dithiol B (g) | - | 13,7 |
| Amin 1[2)] (g) | - | - |
| Amin 2[3)] (g) | 54,4 | 57,9 |
| Reissdehnung[4)] (%) | 74 | 65 |
| Reissfestigkeit[4)] (N/mm²) | 11,8 | 23,5 |
| Zugfestigkeit[4)] (N/mm²) | 11,8 | 33,4 |
| Härte Shore D[5)] | 35 | 68 |
| $T_G$ (°C)[6)] | 18 | 38 |

1) Bisphenol A-diglycidylether mit einem Epoxidäquivalentgewicht von 190,5 g/Val
2) 2,2,4-Trimethylhexan-1,6-diamin
3) Jeffamine® D 400 der Texaco
4) DIN 53455
5) Bestimmt mittels FRANK Härteprüfgerät 38024
6) Mettler TA 3000

## Ansprüche

1. Polytetrahydrofurandithiole der Formel I
$HS{+}CH_2CH_2CH_2CH_2O{+}_y\, CH_2CH_2CH_2CH_2\text{-}SH$ (I),
worin y eine ganze Zahl von 2 bis 30 bedeutet.

2. Dithiole nach Anspruch 1, worin y eine ganze Zahl von 5 bis 30, insbesondere von 7 bis 27, bedeutet.

3. Dithiole nach Anspruch 1, worin y 7 bis 8 bedeutet.

4. Dithiole nach Anspruch 1, worin y 12 bis 13 bedeutet.

5. Dithiole nach Anspruch 1, worin y 26 bis 27 bedeutet.

6. Dithiole nach Anspruch 1, worin das mittlere Molekulargewicht $\overline{M}_n$ kleiner als 2000 ist.

7. Dithiole nach Anspruch 6, worin das mittlere Molekulargewicht $\overline{M}_n$ kleiner als 1000 ist.

8. Verfahren zur Herstellung der Dithiole nach Anspruch 1 durch Umsetzung eines Polytetrahydrofurandiols der Formel II

$HO{-}(CH_2CH_2CH_2CH_2O)_y{-}CH_2CH_2CH_2CH_2{-}OH$ (II)

zum entsprechenden Dihalogenderivat der Formel III

$X{-}(CH_2CH_2CH_2CH_2O)_y{-}CH_2CH_2CH_2CH_2{-}X$ (III),

worin X Cl, Br oder I bedeutet und y die oben angegebene Bedeutung hat, und anschliessende Ueberführung des Dihalogenderivats in das Dithiol der Formel I.

9. Verfahren nach Anspruch 1, worin das Diol der Formel II durch Umsetzung mit Thionylchlorid in Gegenwart einer Base in ein Dichlorderivat der Formel III mit X = Cl übergeführt wird, die Verbindung der Formel III mit Thioharnstoff zum Isothiuroniumchlorid der Formel Iv Umgesetzt wird

$(H_2N)_2C{=}\overset{\oplus}{S}{-}(CH_2CH_2CH_2CH_2O)_y{-}CH_2CH_2CH_2CH_2{-}\overset{\oplus}{S}{=}C(NH_2)_2 \cdot 2\,Cl^{\ominus}$ (IV)

und dieses anschliessend zum Dithiol der Formel I hydrolisiert wird.

Patentansprüche für folgenden Vertragsstaat: ES:

1. Verfahren zur Herstellung der Polytetrahydrofurandithiole der Formel I

$HS{-}(CH_2CH_2CH_2CH_2O)_y{-}CH_2CH_2CH_2CH_2{-}SH$ (I),

worin y eine ganze Zahl von 2 bis 30 bedeutet durch Umsetzung eines Polytetrahydrofurandiols der Formel II

$HO{-}(CH_2CH_2CH_2CH_2O)_y{-}CH_2CH_2CH_2CH_2{-}OH$ (II)

zum entsprechenden Dihalogenderivat der Formel III

$X{-}(CH_2CH_2CH_2CH_2O)_y{-}CH_2CH_2CH_2CH_2{-}X$ (III),

worin X Cl, Br oder I bedeutet und y die oben angegebene Bedeutung hat, und anschliessende Ueberführung des Dihalogenderivats in das Dithiol der Formel I.

2. Verfahren nach Anspruch 1, worin y eine ganze Zahl von 5 bis 30, insbesondere von 7 bis 27, bedeutet.

3. Verfahren nach Anspruch 1, worin y 7 bis 8 bedeutet.

4. Verfahren nach Anspruch 1, worin y 12 bis 13 bedeutet.

5. Verfahren nach Anspruch 1, worin y 26 bis 27 bedeutet.

6. Verfahren nach Anspruch 1, worin das mittlere Molekulargewicht $\overline{M}_n$ der Dithiole kleiner als 2000 ist.

7. Verfahren nach Anspruch 6, worin das mittlere Molekulargewicht $\overline{M}_n$ der Dithiole kleiner als 1000 ist.

8. Verfahren nach Anspruch 1, worin das Diol der Formel II durch Umsetzung mit Thionylchlorid in Gegenwart einer Base in ein Dichlorderivat der Formel III mit X = Cl übergeführt wird, die Verbindung der Formel III mit Thioharnstoff zum Isothiuroniumchlorid der Formel Iv Umgesetzt wird

$(H_2N)_2C{=}\overset{\oplus}{S}{-}(CH_2CH_2CH_2CH_2O)_y{-}CH_2CH_2CH_2CH_2{-}\overset{\oplus}{S}{=}C(NH_2)_2 \cdot 2\,Cl^{\ominus}$ (IV)

und dieses anschliessend zum Dithiol der Formel I hydrolisiert wird.